# DEMANDE DE BREVET EUROPEEN

(11) **EP 0 770 517 A1**
(43) Date de publication de la demande: **02.05.1997**
(21) Numéro de dépôt: 96402163.8
(22) Date de dépôt: 11.10.1996
(51) Int. Cl.: B60N 2/30, B60N 2/20

(54) **Siège auxiliaire**

(30) Priorité: 27.10.1995 FR 9512693
(71) Demandeur: Renault, 92109 Boulogne Billancourt (FR)
(72) Inventeur: Velay, Michel, 78640 Saint Germain en Laye (FR)

(57) **Abrégé**

L'invention concerne un dispositif pour rendre réversible un siège avant (1) comportant une assise (4) et un dossier (3), ledit siège avant (1) étant articulé sur le plancher (6) d'un véhicule de manière à basculer vers l'avant, selon un mouvement, combinant au moins une translation vers l'avant et une rotation vers le haut et vers l'avant, depuis une position dite normale vers une position dite basculée, dispositif caractérisé en ce qu'il comprend une surface d'appui (9) montée à rotation, par une de ses extrémités, autour d'un axe fixé sur l'assise (4) à l'arrière du dossier (3), parallèlement et au niveau de l'axe (5) d'articulation dudit dossier (3) sur ladite assise (4), de manière à se déployer depuis une position relevée où ladite surface d'appui (9) est sensiblement parallèle au dossier (3) vers une position déployée stable dans laquelle ladite surface d'appui (9) fait avec la surface supérieure de l'assise (4) un angle (β) supérieur à 180°.

## Description

L'invention concerne un siège auxiliaire permettant, à l'arrêt, l'utilisation du siège avant d'un véhicule dans le sens contraire au sens normal de marche. L'invention concerne plus particulièrement un dispositif simple permettant de rendre réversible un siège du type de ceux qui basculent vers l'avant, selon un mouvement complexe combinant à la fois une translation vers l'avant et une rotation vers le haut et vers l'avant, par exemple pour dégager l'accès aux places arrières dans le cas d'un véhicule ne comportant pas de portières arrières.

On connaît de la publication FR2697215 un siège réversible qui possède une articulation complexe permettant à la fois le pivotement de l'assise depuis une position inclinée vers le haut et vers l'avant jusqu'à une position inclinée vers le haut et vers l'arrière ainsi que le pivotement du dossier. Un tel mécanisme complexe est difficilement adaptable à des sièges avant basculants du type de ceux décrits ci-dessus.

L'invention vise à procurer un dispositif simple et facilement adaptable aux sièges basculants du type défini ci-dessus afin de les rendre réversibles. A cet effet, l'invention concerne un dispositif pour rendre réversible un siège avant comportant une assise et un dossier, ledit siège avant étant articulé sur le plancher d'un véhicule de manière à basculer vers l'avant, selon un mouvement, combinant au moins une translation vers l'avant et une rotation vers le haut et vers l'avant, depuis une position dite normale vers une position dite basculée, dispositif caractérisé en ce qu'il comprend une surface d'appui montée à rotation, par une de ses extrémités, autour d'un axe fixé sur l'assise à l'arrière du dossier, parallèlement et au niveau de l'axe d'articulation dudit dossier sur ladite assise, de manière à se déployer depuis une position relevée où ladite surface d'appui est sensiblement parallèle au dossier vers une position déployée stable dans laquelle ladite surface d'appui fait avec la surface supérieure de l'assise un angle supérieur à 180°.

Selon une autre caractéristique de l'invention, l'angle entre la surface d'appui et la surface supérieure de l'assise est tel que, le siège avant étant en position basculée, ladite surface d'appui en position déployée stable soit sensiblement horizontale.

Selon une autre caractéristique de l'invention, l'angle entre la surface d'appui et la surface supérieure de l'assise est tel que, le siège avant étant en position normale, ladite surface d'appui en position déployée stable soit suffisamment inclinée vers le bas et vers l'arrière pour servir de repose-pied à l'occupant d'un siège arrière disposé derrière le siège avant

Selon une autre caractéristique de l'invention, le plancher présente, entre le siège avant et le siège arrière un creux qui se prolonge respectivement, dans le sens de la marche par une première surface inclinée vers le haut et vers l'avant, et, dans le sens contraire de la marche, par une seconde surface inclinée vers le haut et vers l'arrière, le siège avant étant articulé sur la première surface inclinée, de manière à augmenter, en position basculée dudit siège et en position déployée de la surface d'appui, la hauteur relative de ladite surface d'appui par rapport au creux et donc au plancher.

Selon une autre caractéristique de l'invention, le siège arrière est disposé sur la seconde surface inclinée.

Selon une autre caractéristique de l'invention, l'axe d'articulation de la surface d'appui sur l'assise est confondu avec l'axe d'articulation du dossier sur ladite assise.

Selon une autre caractéristique de l'invention, la surface d'appui est intégrée, en position repliée, dans l'épaisseur du dossier du siège et découvre, en position déployée, une forme anatomique prévue sur la face arrière du dossier, pour recevoir le dos de l'utilisateur.

D'autres caractéristiques et avantages apparaîtront à la lecture de la description d'un exemple de dispositif selon l'invention, en référence aux dessins dans lesquels :
- la figure 1 est une vue latérale représentant l'agencement intérieur d'un véhicule comprenant au moins un siège arrière et un siège avant muni du dispositif selon l'invention, la surface d'appui étant en position repliée et ledit siège avant en position normale,
- la figure 2 est une vue de l'agencement de la figure 1, la surface d'appui ayant été déployée,
- la figure 3 est une vue de l'agencement de la figure 2, après que le siège avant ait été basculé.

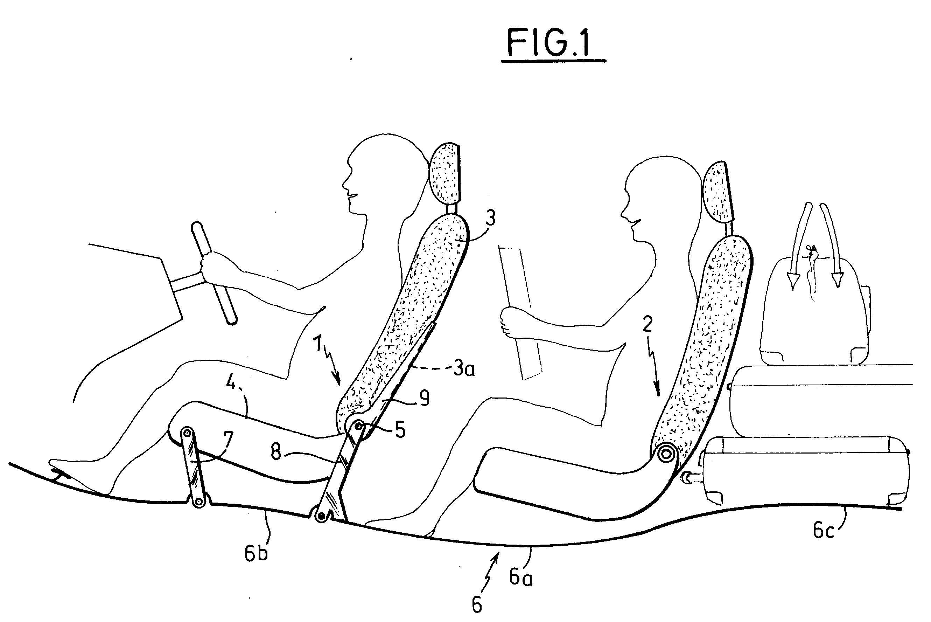

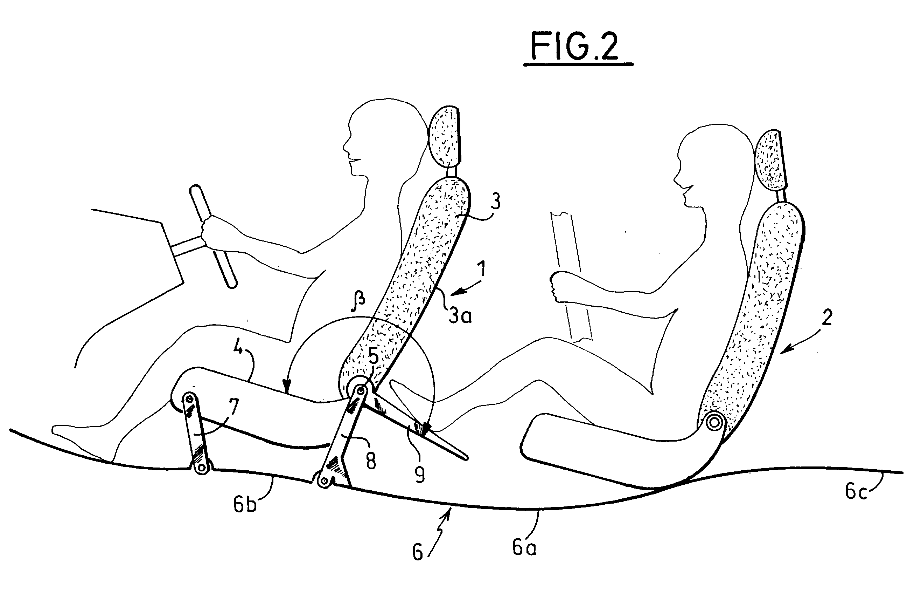

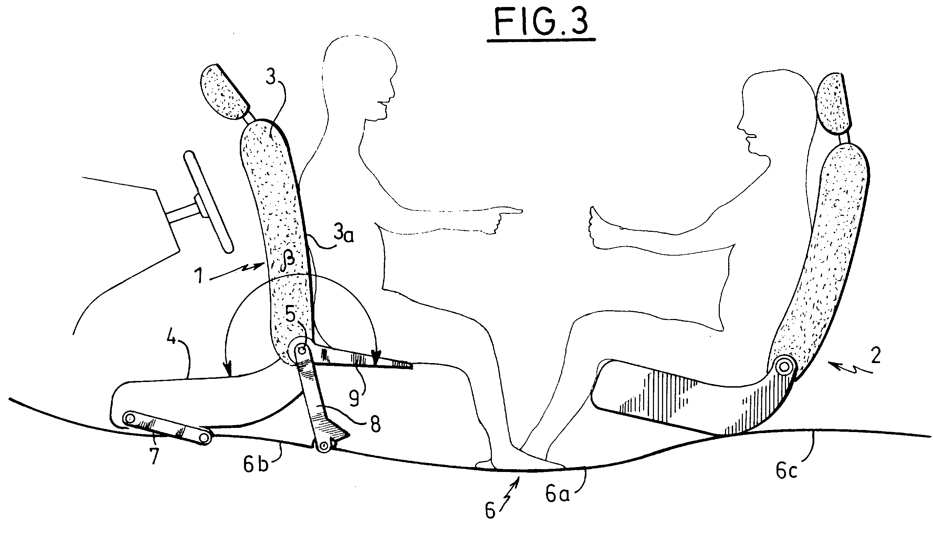

La figure 1 représente l'agencement intérieur d'un véhicule comportant au moins un siège avant 1 et un siège arrière 2. Le siège avant 1 est un siège du type où l'assise et le dossier basculent vers l'avant de manière solidaire selon un mouvement combinant au moins une translation vers l'avant et une rotation vers le haut et vers l'avant, par exemple pour dégager l'accès aux places arrières dans le cas d'un véhicule ne comportant pas de portières arrières. Cette cinématique peut être obtenue par divers moyens. Le siège avant 1 représenté sur la figure 1 comporte un dossier 3 articulé sur une assise 4 selon un axe 5. L'assise 4 est articulée sur le plancher 6 par l'intermédiaire d'un premier jeu de deux biellettes avants 7 et d'un second jeu de deux biellettes arrières 8. Les deux biellettes avants 7, identiques et parallèles, sont articulées chacune, d'une part de chaque côté de l'assise 4 et, d'autre part, sur le plancher 6. De même, les biellettes arrières 8, identiques et parallèles, sont articulées chacune, d'une part, de chaque côté de ladite assise 4 et, d'autre part, sur le plancher 6. Les biellettes 7 et 8 sont dimensionnées et disposées les unes par rapport aux autres de manière à permettre le basculement de l'ensemble constitué de l'assise 4 et du dossier 3 selon un mouvement combinant à la fois une rotation vers le haut et vers l'avant et une translation vers l'avant, depuis une position dite normale, utilisée lors de la conduite vers une position basculée permettant de libérer l'accès au siège arrière 2. Les biellettes arrières 8 seront, par exemple, choisies plus longues et disposées, en position normale du siège avant 1, plus inclinées vers l'arrière que les biellettes avant 7. Le siège avant 1 comporte, sur la face arrière de son dossier 3, une surface d'appui 9 montée à rotation, par une de ses extrémités, autour de l'axe 5 d'articulation dudit dossier 3 sur l'assise 2. Il s'agit là d'une variante particulière et une surface d'appui articulée sur l'assise 4 ou sur le dossier 3 autour d'un axe différent de l'axe 5 ne sortirait pas du cadre de l'invention. La surface d'appui 9 est mobile entre une position relevée, représentée sur la figure 1, où ladite surface d'appui 9 est sensiblement parallèle au dossier 3 et une position déployée stable, représentée sur les figures 2 et 3 où ladite surface d'appui 9 fait avec la surface supérieure de l'assise 4 un angle β supérieur à 180°.

Lorsque le siège avant 1 est en position normale, la surface d'appui 9 en position déployée stable est suffisamment inclinée vers le bas et vers l'arrière pour faire office de repose-pieds pour l'occupant du siège arrière 2, comme il est représenté sur la figure 2. Lorsque le siège avant 1 est en position basculée, la surface d'appui 9 en position déployée stable, en combinaison avec la face arrière du dossier 3, peut alors tenir lieu de siège auxiliaire permettant au conducteur de venir s'asseoir en face du passager assis dans le siège arrière 2, par exemple pour prendre un repas en tête à tête à l'intérieur du véhicule. En effet, le basculement vers l'avant du siège avant 1 libère l'espace entre ledit siège avant 1 et le siège arrière 2, permettant ainsi à deux personnes de s'asseoir en vis à vis. On peut envisager que la surface d'appui 9 dispose de plusieurs positions déployées dont une correspondant à la fonction repose-pieds et l'autre à la fonction siège auxiliaire. Mais selon la variante particulièrement avantageuse et simple de l'invention représentée sur les figures, la surface d'appui 9 ne dispose que d'une seule position déployée stable. Dans ce cas, les différents composants du siège avant 1, et en particulier les biellettes 7 et 8, sont dimensionnées de manière à ce que, en position déployée, la surface d'appui 9 soit suffisamment inclinée pour tenir lieu de repose-pieds pour l'occupant du siège arrière 2 lorsque le siège avant 1 est en position normale et sensiblement horizontale lorsque ledit siège 1 est en position basculée. En effet, le basculement vers l'avant entraîne une rotation du siège avant 1 vers le haut et vers l'avant et donc, une rotation identique de la surface d'appui 9 en position déployée qui passe ainsi de la position repose-pieds à une position sensiblement horizontale. De plus, ce basculement entraîne une élévation de la partie arrière de l'assise 4 sur laquelle est articulée la surface d'appui 9 qui se trouve ainsi suffisamment relevée pour tenir lieu de siège auxiliaire. La variante ne comportant qu'une seule position déployée présente l'avantage de ne nécessiter, pour passer de la position assise dans le sens de la marche à la position assise dans le sens contraire, aucun réglage supplémentaire en dehors du basculement du siège avant 1. Il suffit en effet de basculer le siège avant 1 et de déployer la surface d'appui 9 vers le bas jusqu'à sa position de blocage pour obtenir un siège auxiliaire faisant face au siège arrière 2. Le blocage de la surface d'appui 9 en position déployée stable pourra être réalisé par tout moyen connu de l'homme de l'art et en particulier par une simple butée en rotation. Il est bien clair qu'il est nécessaire de prévoir un dispositif de verrouillage du siège avant 1 en position basculée de façon à ce que, lors de l'utilisation de la surface d'appui 9 comme siège auxiliaire, ledit siège 1 ne bascule pas à nouveau dans sa position normale. A cet effet, on pourra utiliser tout mécanisme de verrouillage connu de l'homme du métier.

Selon une variante, le plancher 6 présente, entre le siège avant 1 et le siège arrière 2, un creux 6a qui se prolonge respectivement dans le sens de la marche par une première surface 6b inclinée vers le haut et vers l'avant et, dans le sens contraire de la marche, par une seconde surface 6c inclinée vers le haut et vers l'arrière. Le siège avant 1 est articulé en position normale d'utilisation, sur la première surface 6b inclinée. Cette disposition du siège avant 1 permet en position basculée dudit siège 1 et en position déployée de la surface d'appui 9 d'augmenter la hauteur relative de ladite surface 9 par rapport au plancher 6, en l'occurrence par rapport au creux 6a et d'augmenter ainsi le confort d'utilisation du siège auxiliaire. Le siège arrière 2 est lui disposé sur la surface 6c inclinée le long de laquelle il peut remonter. Cette remontée permet soit de surélever le siège arrière 2 par rapport à la surface d'appui 9 déployée en contre-bas, dans le creux 6a, pour servir de repose-pieds comme il est représenté sur la figure 2, soit de dégager de l'espace en vue de l'utilisation de ladite surface d'appui 9 comme siège auxiliaire, comme il est représenté sur la figure 3.

Selon une variante, la surface d'appui 9 est intégrée, en position repliée, dans l'épaisseur du dossier du siège avant 1 et découvre, en position déployée, une forme anatomique 3a prévue sur la face arrière du dossier 3, pour recevoir les reins de l'utilisateur.

Bien entendu, l'invention n'est nullement limitée au mode de réalisation décrit et illustré qui n'a été donné qu'à titre d'exemple: En particulier, toute forme d'articulation du siège sur le plancher procurant le même mouvement de basculement vers l'avant conviendrait parfaitement. De plus, on pourrait également envisager que la surface d'appui en position repliée ne soit plus intégrée dans l'épaisseur du dossier siège avant mais conserve un angle d'inclinaison faible par rapport audit dossier de façon à créer avec ce dernier un vide-poches. Dans cette variante, la surface d'appui pourrait être montée à rotation sur le dossier et non plus sur l'assise du siège avant.

Enfin, il est bien clair que la surface d'appui peut également équiper d'autre sièges que les sièges avants basculants d'un véhicule particulier classique. Elle peut équiper un siège arrière basculant, par exemple à l'intérieur d'un véhicule de type monospace comportant une troisième rangée de sièges accessibles après basculement des sièges arrières. Elle peut également équiper les sièges basculants d'un véhicule de transport en commun.

## Revendications

1. Dispositif pour rendre réversible un siège avant (1) comportant une assise (4) et un dossier (3), ledit siège avant (1) étant articulé sur le plancher (6) d'un véhicule de manière à basculer vers l'avant, selon un mouvement, combinant au moins une translation vers l'avant et une rotation vers le haut et vers l'avant, depuis une position dite normale vers une position dite basculée, dispositif caractérisé en ce qu'il comprend une surface d'appui (9) montée à rotation, par une de ses extrémités, autour d'un axe fixé sur l'assise (4) à l'arrière du dossier (3), parallèlement et au niveau de l'axe (5) d'articulation dudit dossier (3) sur ladite assise (4), de manière à se déployer depuis une position relevée où ladite surface d'appui (9) est sensiblement parallèle au dossier (3) vers une position déployée stable dans laquelle ladite surface d'appui (9) fait avec la surface supérieure de l'assise (4) un angle (β) supérieur à 180°.

2. Dispositif selon la revendication précédente caractérisé en ce que l'angle (β) entre la surface d'appui (9) et la surface supérieure de l'assise (4) est tel que, le siège avant (1) étant en position basculée, ladite surface d'appui (9), en position déployée stable, soit sensiblement horizontale.

3. Dispositif selon l'une quelconque des revendications précédentes caractérisé en ce que l'angle (β) entre la surface d'appui (9) et la surface supérieure de l'assise (4) est tel que, le siège avant (1) étant en position normale, ladite surface d'appui (9) en position déployée stable soit suffisamment inclinée vers le bas et vers l'arrière pour servir de reposepied à l'occupant d'un siège arrière (2) disposé derrière le siège avant (1).

4. Dispositif selon l'une quelconque des revendications précédentes caractérisé en ce que le plancher (6) présente, entre le siège avant (1) et le siège arrière (2) un creux (6a) qui se prolonge respectivement, dans le sens de la marche par une première surface (6b) inclinée vers le haut et vers l'avant, et, dans le sens contraire de la marche, par une seconde surface (6c) inclinée vers le haut et vers l'arrière, le siège avant (1) étant articulé sur la première surface (6b) inclinée, de manière à augmenter, en position basculée dudit siège (1) et en position déployée de la surface d'appui (9), la hauteur relative de ladite surface d'appui (9) par rapport au creux (6a) et donc au plancher (6).

5. Dispositif selon la revendication précédente caractérisé en ce que le siège arrière (2) est disposé sur la seconde surface (6c) inclinée.

6. Dispositif selon l'une quelconque des revendications précédentes caractérisé en ce que l'axe d'articulation de la surface d'appui (9) sur l'assise (4) est confondu avec l'axe (5) d'articulation du dossier (3) sur ladite assise (4).

7. Dispositif selon l'une quelconque des revendications précédentes caractérisé en ce que la surface d'appui (9) est intégrée, en position repliée, dans l'épaisseur du dossier (3) du siège avant (1) et découvre, en position déployée stable, une forme anatomique (3a) prévue sur la face arrière du dossier (3), pour recevoir le dos de l'utilisateur.
